# EUROPEAN PATENT APPLICATION

(11) **EP 3 964 663 A1**
(43) Date of publication of application: **09.03.2022**
(21) Application number: 21194250.3
(22) Date of filing: 01.09.2021
(51) Int. Cl.: E04D 13/12

(54) **ANCHORING ARRANGEMENT**

(30) Priority: 08.09.2020 SE 2051054
(71) Applicant: CWL Patent AB, 792 22 Mora (SE)
(72) Inventor: GRANSTRÖM, Linus, 792 32 Mora (SE)
(74) Representative: Ehrner & Delmar Patentbyrå AB

(57) **Abstract**

The present invention relates to an anchoring arrangement for a roof comprising an attachment element (14) comprising a band-shaped elongated body (12), a first end (16) of the body provided with fastening elements (18, 20) for attachment to a fixed structure of the roof, wherein a major part of said body (12) is arranged to be placed under roof tiles on said roof, a second end (22) of the body (12) being arranged to extend outside roof tiles of said roof and provided with at least two first fastening structures (26), a support element (38) arranged with at least two second fastening structures (48), wherein said support element (38) is arranged to be placed on top of roof tiles, characterised in that one of said at least two first fastening structures (26) of said second end (22) of the body (12) and said at least two second fastening structures (48) of the support element (38) are arranged in a generally vertical direction in relation to the plane of the roof and the other of said first and second fastening structures are arranged in a generally horizontal direction in relation to the plane of the roof so as to provide adjustment of the at least two first and second fastening structures (26, 38) in a vertical direction as well as in a direction transversal to the inclination of said roof for enabling attachment by attachment elements (68) to said first and second fastening structures (26, 38).

## Description

### TECHNICAL AREA

The present invention relates to an anchoring arrangement for safety and access equipment for roof structures.

### BACKGROUND OF INVENTION

In order to provide safe and accessible arrangements for persons that need to be on elevated building structures such as roofs, a number of solutions have been developed during the years. For instance, ladders are widely used for access to service locations on the roofs. Apart from the access aspect, they should also function as anchor points for personal fall protection. This means that they have to be anchored securely to the roof structure. At the same time, the anchoring must not interfere with or damage roof cover components such as for example roof tiles.

Some solutions have been developed for securing ladders to roofs, comprising brackets that are attached to structures such as roofing battens. The brackets are then provided with consoles that are profiled such that they extend from under one tile to above an adjacent tile placed on the side thereof as seen in the direction of inclination of the roof. The consoles are then provided with attachment elements for a ladder. The consoles are designed for specific types and designs of the tiles and the solution requires two elements in order to obtain an attachment point for a ladder.

Due to that the consoles extend on the side of a tile, a force having a direction in line generally with the inclination of the roof acting on the console, for instance by a person falling off the roof, may cause the tiles to be loosened and may cause them to fall of the roof and may cause damage and injuries to persons below the roof.

### BRIEF DESCRIPTION OF INVENTION

The aim of the present invention is to provide an anchoring arrangement for a roof provided with the features of the independent claim 1. Preferable embodiments of the invention form the subject of the dependent patent claims.

According to a main aspect, the application comprises an anchoring arrangement for a roof comprising a band-shaped elongated body, with a first end of the body that may be provided with fastening elements for attachment to a fixed structure of the roof such as roof battens, wherein a major part of said body is arranged to be placed under roof tiles on the roof.

Further, a second end of the body may be arranged to extend outside roof tiles of the roof and may be provided with at least two first fastening structures. The anchoring arrangement also comprises a support element arranged with at least two second fastening structures, wherein the support element may be arranged to be placed on top of roof tiles. Preferably the first fastening structures of the lower end of the body and the second fastening structures of the support element may be arranged so as to provide adjustment of the first and second fastening structures both in a vertical direction as well as in a direction transversal to the inclination of the roof for enabling attachment by attachment elements to the first and second fastening structures.

The solution provides means for adjusting the attachment between the attachment element and the support element for different types of tiles both regarding width of the tiles as well as the depths of the valleys of the tiles. Thus, the support element may be shifted in the transversal direction so as to rest properly on the top of the tiles, where the attachment in different positions is enabled by the at least two fastening structures on both the attachment element as well as the support element.

In order to provide the adjustment, the first fastening structure may comprise a plurality of holes arranged in a generally vertical direction in relation to the plane of the roof. Also, the first fastening structure may comprise a plurality of holes arranged in a generally horizontal direction in relation to the plane of the roof. Thereby, the adjustment in both the vertical direction as well as in the transversal direction is enabled by these plurality of holes.

According to one feasible solution, the first fastening structures may be arranged on a console arranged to the second end of the attachment element, which console extends in a generally vertical direction in relation to the plane of the roof. The console may it this regard be an integral part of the attachment element, for example made in one piece and bent in generally 90 degrees.

The anchoring arrangement may further comprise a bending initiator arranged in the transition between the second end of the attachment element and the console. This solution provides a possibility of adjusting the inclination of the console in order to facilitate attachment to the support element.

For the transversal adjustment, the second fastening structure of the anchoring arrangement may comprise a plurality of holes arranged in a generally horizontal direction in relation to the plane of the roof. The support element may further comprise an elongated bracket and wherein the second fastening structures are arranged on an upwards facing surface of the elongated bracket. Further, the support element may at least have a length so as to rest on at least three ridges on adjacent tiles.

According to a further aspect, the attachment element may be arranged with height adjustment elements. This solution provides further adjustment possibilities in the generally vertical direction in relation to the plane of the roof. In this regard, the height adjustment elements may comprise bending initiators arranged on the body in the vicinity of the console element.

According to a yet an aspect, the body of the anchoring arrangement may be provided with a bend so as to adapt to the height of a roof tile on which the body will rest when attached to the roof.

Further, the upper part of the attachment element may be provided with a bracket designed to be attached to an upper side surface of a batten.

These and other aspects of, and advantages with, the present invention will become apparent from the following detailed description of the invention and from the accompanying drawings.

### BRIEF DESCRIPTION OF DRAWINGS

In the following detailed description of the invention, reference will be made to the accompanying drawings, of which
Fig. 1 shows a perspective view of an anchoring arrangement for a roof, in particular a tiled roof with battens,
Fig. 2 shows a perspective view of an anchoring arrangement according to Fig. 1 mounted on a roof,
Figs. 3 and 4 show side views of adjustment between an attachment element and a support element,
Figs. 5 and 6 show different variants of attachment elements, and
Fig. 7 shows a perspective view of a variant of an anchoring arrangement according to Fig. 1 mounted on a roof.

### DETAILED DESCRIPTION OF THE INVENTION

The following definitions will be used in the detailed description. Upper is defined as a part or direction of an element that is higher up along a sloping, inclined roof or roof part while lower is defined as a part or direction of an element that is lower down along the inclination. Upwards is defined as towards the ridge of a roof while downwards is defined as towards the eaves of the roof.

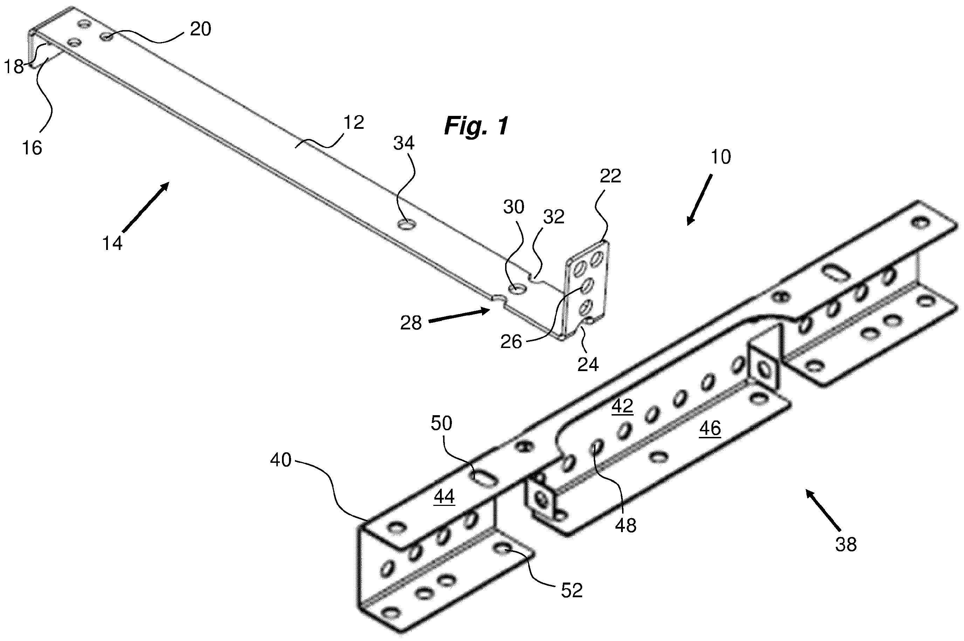

One embodiment of an anchoring arrangement 10 is shown in Fig. 1. It comprises a band-shaped elongated body 12 of an attachment element 14. A first end of the body 12 is arranged with a bracket 16 extending generally 90 degrees in relation to the extension of the body 12. The bracket 16 is arranged with a hole 18. Further, the area of the body 12 adjacent the first end is arranged with a number of holes 20. A second end of the body 12 is arranged with a console element 22 extending generally 90 degrees in relation to the extension of the body 12. The transition between the body 12 and the console element 22 is provided with a bending initiator in the form of a hole 24. The console element 22 is arranged with a plurality of holes 26 that are placed both horizontally and vertically on the console element 22 in relation to a plane of a roof, forming first fastening structures.

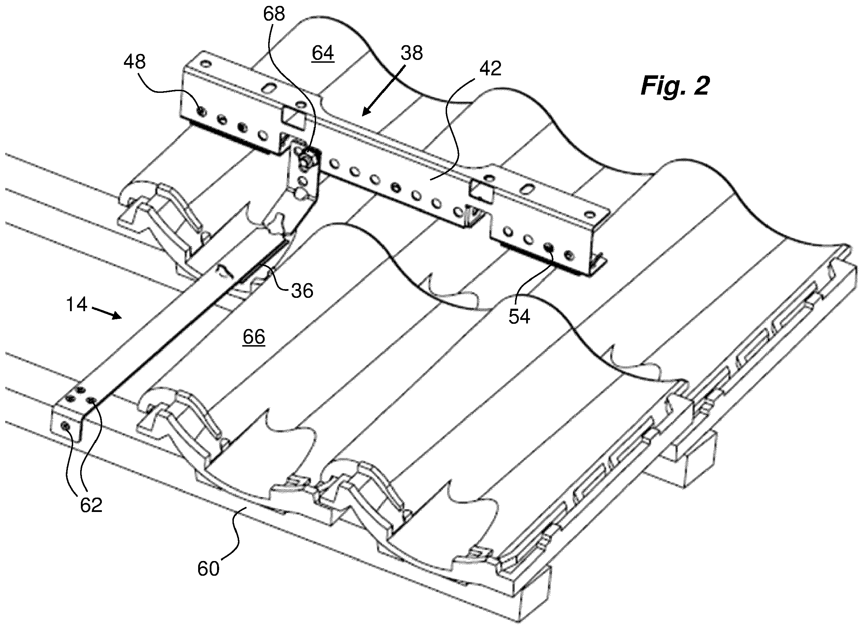

Further, an area of the body 12 in the vicinity of the console element 22 is arranged with a bending initiator 28, comprising a hole 30 and cut-outs 32 on each side of the hole 30 as seen in a direction transversal to the extension of the body. A further hole 34 is arranged on the body, wherein a cushioning element 36 may be attached via the holes 30 and 34, being placed on the underside of the body 12 as seen in Fig. 2 and as will be explained. The attachment element 14 may be made from a sheet steel plate wherein the shape and the holes are stamped in one operation. The bracket 16 and the console may be bent during the stamping operation or in a subsequent bending operation.

The anchoring arrangement 10 further comprises a support element 38. The support element 38 has an elongated body 40 that has a general C-shape as seen in a cross-section with a central section 42, an upper section 44 and a lower section 46. The central section 42 of the support element 38 is arranged with a row of holes 48, forming second fastening structures. The upper section 44 of the body 40 is further arranged with a number of holes 50, that may be somewhat elongated. Also, the lower section 46 may be arranged with holes 52 such that cushioning elements 54 can be attached on the underside of the lower section 46, see Fig. 2.

The function of the anchoring arrangement 10 is intended to be as follows. The attachment element 14 is placed on the roof such that the body 12 is placed on roofing battens 60 of a roof such that the bracket 16 is in contact with a side surface facing upwards of one roofing batten 60. The body is then attached to the roofing batten 60 by appropriate fastening elements such as screws 62 in the hole 18 of the bracket 16 and the holes 20 on the upper section of the body 12. In this regard, the holes 20 on the upper section of the body 12 are positioned such that the screws 62 will not affect the same fibres if a wooden batten is used. The lower section of the body 12 is positioned in the valley of a lower tile 64, resting with the cushioning element 36 on the tile, and an upper tile 66 may be placed covering the body 12. The length of the body 12 is such that the console element 22 is below the upper tile 66 and is extending generally perpendicular to the plane of the roof. The support element 38 is then placed on top of the tiles and has a length such that it rests with the cushioning elements 54 of the lower section 46 on the ridges of three adjacent tiles as seen in a transversal direction. The central section 42 of the support element 38 is placed in contact with the console element 22. The support element 38 is then adjusted somewhat in the transversal direction so that one of the holes of the console element 22 is aligned with one of the holes 48 of the central section 42 of the support element 38.

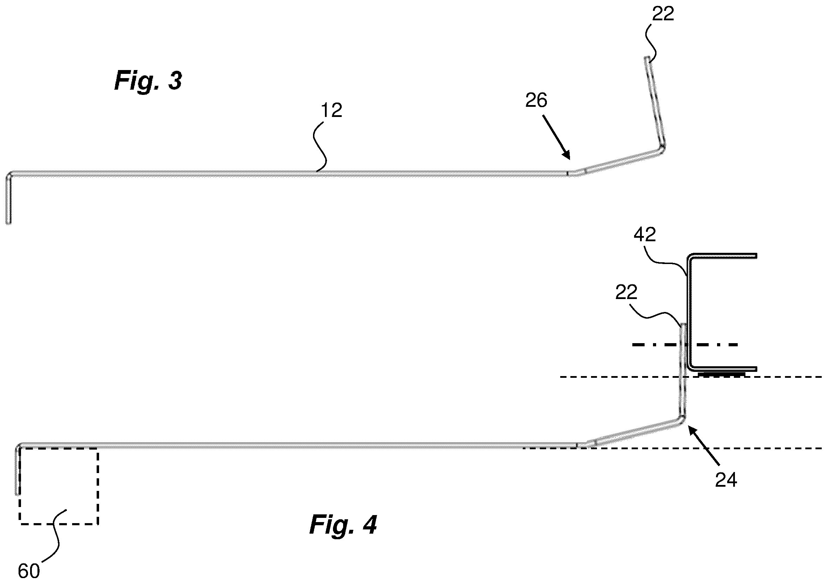

Depending on the design of the tiles, and in particular the depth of the valleys of the tiles used, the lower end of the body 12 may have to be adjusted in height so that the holes 26 of the console element 22 are aligned in relation to the row of holes 48 of the support element 38 when the support element 38 is placed on the tiles. This is done by bending the lower part of the body 12 at the bending initiator 28 in order to raise the console element 22, Fig. 3. This adjustment may also necessitate a bending of the console element 22 at its bending initiator 24 so that the side surface of the console element 22 is generally parallel with the surface of the central section 42 of the support element 38, Fig. 4. Appropriate attachment elements, such as bolts and nuts 68 are then used in the holes to firmly attach the support element 38 to the attachment element 14. Onto this support element 38, a ladder or any other safety or roof equipment may be attached by appropriate means such as bolts and nuts through the holes 50 of the upper section 44.

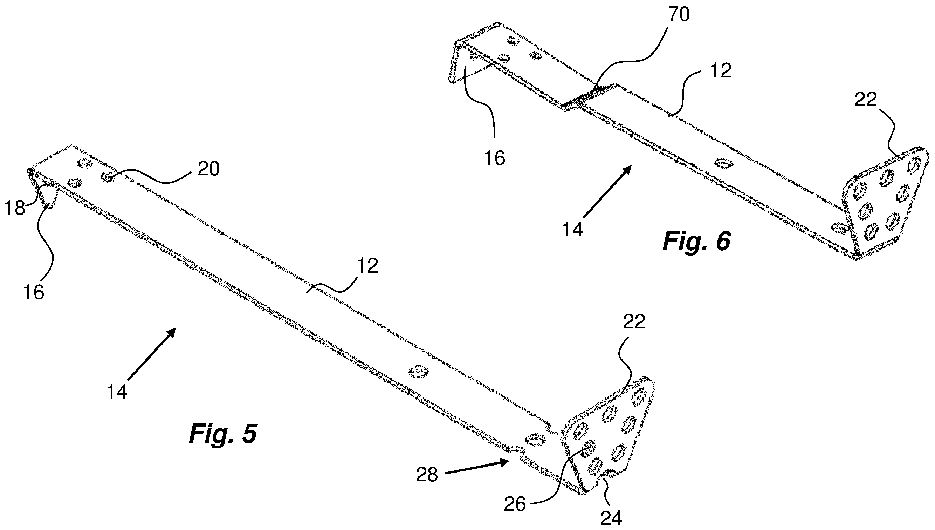

Figure 5 shows a variant of the attachment element 14. Here the console element 22 is designed somewhat differently with a wider upper end and with more holes 26 for the attachment to the support element, providing good adjustment possibilities between the console element 22 and the support element 38. For the rest, the attachment element has the same design and features as the previously described attachment element.

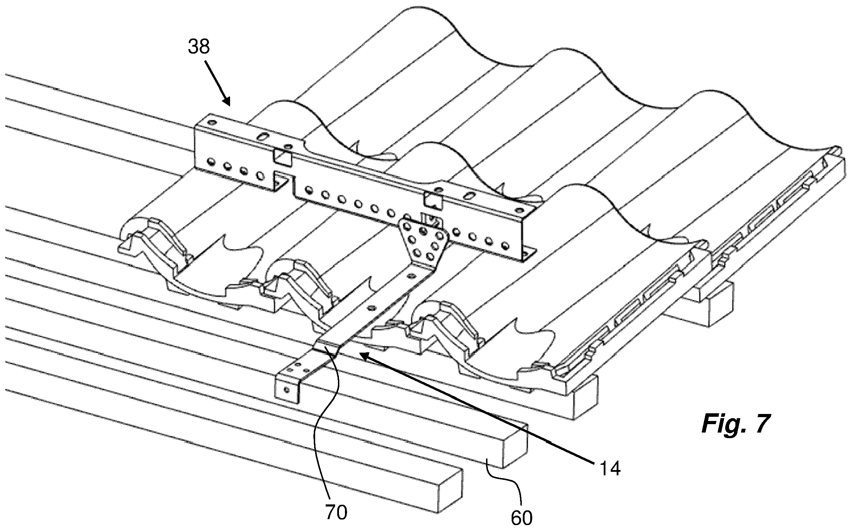

Figure 6 shows a further variant of the attachment element 14. Here the body 12 is provided with a bend 70 so that the lower part of the body is elevated in relation to the upper section. This elevation caused by the bend 70 is intended to accommodate and handle the thickness of the tile on which the attachment element 14 rests as seen in figure 7. The variant of Fig. 6 is not provided with any bend initiators, but it is to be understood that also this attachment element may be provided with such initiators. For all the variants, several anchoring arrangements may be used and attached on a roof in the manner described above, for instance if a ladder is to be attached.

It is to be understood that the embodiment described above and shown in the drawings is to be regarded only as a non-limiting example of the invention and that it may be modified in many ways within the scope of the patent claims.

## Claims

1. Anchoring arrangement for a roof comprising:
- an attachment element (14) comprising a band-shaped elongated body (12),
- a first end (16) of the body provided with fastening elements (18, 20) for attachment to a fixed structure of the roof, wherein a major part of said body (12) is arranged to be placed under roof tiles on said roof,
- a second end (22) of the body (12) being arranged to extend outside roof tiles of said roof and provided with at least two first fastening structures (26),
- a support element (38) arranged with at least two second fastening structures (48), wherein said support element (38) is arranged to be placed on top of roof tiles, **characterised in that** one of said at least two first fastening structures (26) of said second end (22) of the body (12) and said at least two second fastening structures (48) of the support element (38) are arranged in a generally vertical direction in relation to the plane of the roof and the other of said first and second fastening structures are arranged in a generally horizontal direction in relation to the plane of the roof so as to provide adjustment of the at least two first and second fastening structures (26, 38) in a vertical direction as well as in a direction transversal to the inclination of said roof for enabling attachment by attachment elements (68) to said first and second fastening structures (26, 38).

2. Anchoring arrangement according to claim 1, wherein said first fastening structure comprises a plurality of holes (26) arranged in a generally vertical direction in relation to the plane of the roof.

3. Anchoring arrangement according to claim 2, wherein said first fastening structure comprises a plurality of holes (26) arranged in a generally horizontal direction in relation to the plane of the roof.

4. Anchoring arrangement according to any of the claims 1 to 3, wherein said first fastening structures are arranged on a console (22) arranged to the second end of the attachment element (14), which console (22) extends in a generally vertical direction in relation to the plane of the roof.

5. Anchoring arrangement according to claim 4, further comprising a bending initiator (24) arranged in the transition between the second end of the attachment element (14) and the console (22).

6. Anchoring arrangement according to any of the claims 1 to 5, wherein said second fastening structure comprises a plurality of holes (48) arranged in a generally horizontal direction in relation to the plane of the roof.

7. Anchoring arrangement according to claim 6, wherein said support element (38) comprises an elongated bracket and wherein said second fastening structures (48) are arranged on an upwards facing surface (42) of said elongated bracket.

8. Anchoring arrangement according to any of the claims 1 to 7, wherein said support element (38) at least has a length so as to rest on at least three ridges on adjacent roof tiles.

9. Anchoring arrangement according to any of the preceding claims, wherein said attachment element (14) is arranged with height adjustment elements (28, 70).

10. Anchoring arrangement according to claim 4, wherein said height adjustment elements comprise bending initiators (28) arranged on said body in the vicinity of said console element (22).
